Europäisches Patentamt

European Patent Office

Office européen des brevets

(11) Publication number: **0 233 400 B1**

# EUROPEAN PATENT SPECIFICATION

(45) Date of publication of patent specification: **15.07.92**    (51) Int. Cl.⁵: **C08J 5/18**, C08L 23/10, C08L 23/20

(21) Application number: **86309117.9**

(22) Date of filing: **21.11.86**

(54) **Butene-1/propylene copolymer blends.**

(30) Priority: **25.11.85 US 801344**
**25.11.85 US 801343**

(43) Date of publication of application:
**26.08.87 Bulletin 87/35**

(45) Publication of the grant of the patent:
**15.07.92 Bulletin 92/29**

(84) Designated Contracting States:
**AT BE CH DE FR GB IT LI LU NL SE**

(56) References cited:
**FR-A- 2 314 211**
**FR-A- 2 314 212**
**FR-A- 2 361 225**
**GB-A- 2 012 282**
**US-A- 4 230 767**

(73) Proprietor: **SHELL OIL COMPANY**
**900, Louisiana**
**Houston Texas 77001(US)**

Proprietor: **MITSUI PETROCHEMICAL INDUS-**
**TRIES, LTD.**
**2-5, Kasumigaseki 3-chome Chiyoda-ku**
**Tokyo 100(JP)**

(72) Inventor: **Hwo, Charles C.**
**2710 Sugarwood**
**Sugarland Texas 77478(US)**

(74) Representative: **Myerscough, Philip Boyd et al**
**J.A.Kemp & Co. 14, South Square Gray's Inn**
**London, WC1R 5EU(GB)**

## Description

The present invention relates to a blend of a propylene polymer with a butene-rich butene-1-polymer copolymer, which blend may be fabricated into thermoplastic films and laminar structures which are heat shrinkable and which have good clarity and good processability.

Thermoplastic blends can be used to provide films for use as packaging material, for example to shrink package objects in thermoplastic shrink film. Shrink film is used in many applications, for example in packaging and wrapping articles such as toys, sporting goods, stationary, greeting cards, hardware, household products, office supplies and forms, phonograph records, industrial parts, computer floppy diskettes, and photo albums. Heat is applied to the film and the film shrinks to conform to the shape of the article packaged therein.

Many thermoplastic films shrink to some extent if they are subjected to elevated temperatures. Use is made of this characteristic in shrink packaging by subjecting objects packaged in such films for a short time to elevated temperatures, e.g. by exposing them to a blast of heated air or by immersing in boiling water so that the film shrinks, thereby tightly enclosing the objects packaged therein. Examples of shrink films are films fabricated from polyolefins or irradiated polyolefins.

For most shrink film applications, a film should exhibit a high shrink energy or contractile force when exposed to elevated temperatures. In addition, the film should not only be heat shrinkable but have good clarity and be easily processed. Clarity is important in the marketing aspect of the packaged goods so that the consumer can ascertain what he or she is purchasing. Additional advantages of shrink packaging made from blends should include: (1) adds luster, enhances product appearance; (2) imparts comtemporary image to the product; (3) helps the product sell itself; (4) keeps out dust and moisture so that the product does not become shop worn: (5) discourages shoplifters; (6) speeds production; (7) cuts labor and material costs; (8) reduces labeling cost; (9) is easy for packaging operators to use; (10) simplifies internal handling; (11) wraps unusual shapes with a contour fit; (12) versatile--serves many packaging needs; and (13) excellent for bundling and multipackaging.

A shrink film should possess the following specific properties:

(1) the shrink force should be between 100 and 400 grams per 2.54 cm (inch) at 100°C depending on the objects to be encased;

(2) the percent shrinkage should be between 10 and 50% at 121°C depending on the objects to be encased;

(3) the film should have high clarity or optics;

(4) the modulus should be between 410 to 2400 MPa (60,000 and 350,000 psi) depending upon the objects to be encased;

(5) machinability: the coefficient of friction should be less than 0.5;

(6) tear strength: the tear strength should be as high as possible; typical is 3 to 15 grams per 25.4 $\mu$m (mil) of film thickness and per 2.54 cm (inch) of width; and

(7) elongation: the elongation should be between 50 and 150% depending on the objects to be encased.

Films from the blends may be oriented or unoriented. Oriented films may be obtained by stretching processes in which tensions capable of stretching the film are applied to the film, the directions of which form an angle of about 90° utilizing well known prior art techniques. These film stretching tensions may be applied sequentially, as when a film, after forming, is subjected to stretching in a longitudinal direction and thereafter tension is applied in a transverse direction to stretch the film transversely, or simultaneously, whereby longitudinal and transverse tensions are applied to the film at the same time resulting in a simultaneous longitudinal and transverse stretching of the film. Such processes are well known in the art and include for example the "double-bubble" method which comprises extrusion of material into a tubular stalk film, cooling of the tubular stalk, reheating and inflating of the tube and simultaneously drawing the inflated tube in a longitudinal direction thereby imparting biaxial orientation to the film. Another common method for the biaxial orientation of the film sheet comprises passing the film sheet through a series of rotating draw rollers which impart longitudinal direction stretch to the film and subsequently transversely drawing the longitudinally stretched film, for example, by passing it through a tenter frame wherein the film is stretched in a transverse direction.

US-A-3,900,534 discloses a biaxially oriented thermoplastic film structure formed from a blend comprising polypropylene and polybutene homopolymers where the polybutene is present in a small amount of more than 10% but less than 20% by weight.

US-A-3,634,553 discloses a heat shrinkable oriented thermoplastic film which comprises a blend of polypropylene and an ethyienelbutene-1 copolymer.

EP-A-0,145,014 discloses a blend of a random copolymer of propylene and an alpha olefin with 4 or more carbon atoms (i.e. perhaps butene-1), where the alpha olefin content in the copolymer is 8 to 30 mole% (m%).

Single layer shrink films based on blends of polybutylene with polypropylene are disclosed in various Mobil Patents: US-A-3,634,552 (1972), US-A-3,634,553 (1972), US-A-3,849,520 (1974) and US-A-3,900,534 (1975). Blends of polybutylene with ethylene vinyl acetate (EVA) and $C_2$-$C_\alpha$ elastomer or polybutylene with low density polyethylene (LDPE) and $C_2$ $C_\alpha$ elastomer (where $C_\alpha$ is an $\alpha$-olefin comonomer) are disclosed in US-A-4,379,883 (1983). Multilayers may include three layers (propylene-ethylene plus butene-1-ethylene plus ethylene-propylene rubber)/tie layer/linear low density polyethylene (LDPE) as disclosed in US-A-4,196,240 (1980) for frozen poultry and US-A-4,207,363 (1980) for primal meat cuts. Three layers of propylene-ethylene/(EVA + butene-1-ethylene)/propylene-ethylene are disclosed in US-A-4,194,039 (1980). Also, three layers (polypropylene + polybutylene)/EVA/irradiated EVA are disclosed in US-A-3,754,063 (1973), US-A-3,832,274 (1974) and US-A-3,891,008 (1975) for turkey bags.

Heretofore, polyvinyl chloride (PVC) has been used to produce good shrink films. PVC has been shown to be much better in certain applications than olefin polymers such as propylene polymers. This is because the use of olefin polymers in shrink wrap results in a moderate to high shrink force which is undesirable in many applications. However, the use of olefin polymers allows for the use of high speed automated packaging machinery with ease of control, lower cost, and less deposit from corrosion of equipment, which results in less equipment maintenance than when using PVC. PVC, however, may produce a better looking package because of the low shrink force and better optics. Also, the seal and shrink may take place over a much broader temperature and tear strength may be better.

It has been desired to produce a blend for producing a heat shrinkable thermoplastic film with the film advantages of PVC but which is of low cost, can be used on a high speed automated packaging machine and which does not corrode equipment.

The present invention provides a blend suitable for use in producing a heat shrinkable, thermoplastic film or sheet, which blend comprises a mixture containing:

(i) from 10 to 60% by weight of a butene-1/propylene copolymer, wherein the propylene comonomer content is from 10 to 30 mole percent; and

(ii) from 40 to 90% by weight of a propylene polymer.

The blend of the invention can be used to provide single layer packaging films or sheets which have a low shrink force (adjustable by the blending ratio of (i) and (ii)), low shrink temperature, low stiffness with better optics, which do not corrode the equipment being used, are readily processed, are of low cost and can be used on high speed automated packaging machines.

Preferably the blend comprises from 20 to 50% by weight of (i) and from 50 to 80% by weight of (ii). An especially preferred blend is that which comprises about 35% by weight of (i), wherein the propylene comonomer content is about 20 mole percent, and about 65% by weight of (ii).

The propylene polymer (ii) may be a propylene homopolymer or a copolymer of propylene with, for example, ethylene. Suitable copolymers include copolymers having an ethylene content of 1 percent by weight, although the ethylene content may vary considerably.

The components (i) and (ii) of the blend of the present invention are blended together to form a substantially homogeneous resin mixture. This may be accomplished, for example, by tumbling the mixture in a fiber drum. The tumbled mixture can then be melt compounded using an extruder having good mixing screw, and pelletized thereafter. The blend is then extruded into a single layer film or sheet utilizing a standard extruder and tubular or flat film die and is subsequently oriented utilizing any one of a number of prior art orientation techniques.

Various gauges of shrink film or sheet may be manufactured from the blend of the present invention. The gauge can vary from 2.5 to 130 $\mu$m (0.10 to 5 mils), preferably 13 to 51 $\mu$m (0.5 to 2.0 mils), depending to a great extent upon the type of shrink packaging applications for which the film is manufactured.

In use,a film may be placed around the product, formed into a bag, subjected to heat and shrunk tightly around the product. A variety of manual or automatic equipment is available for shrink packaging. Equipment can use single-wound or centerfolded film. A sealing unit and shrink tunnel are needed for shrink packaging. In a typical semi-automatic shrink packaging operation only three essential units are required--(1) a work surface for dispensing the film and inserting the product to be packaged, (2) an L-sealer, and (3) a heat tunnel.

For L-sealers, the film is supplied folded on a roll in widths to suit the ned. By using the folded film, the folded edge forms one side of the eventual package. The produce to be packaged is inserted between the open edges of the folded film (opposite the folded edge) and then moved to the heat sealing unit. Here an L-bar containing a hot wire descends and heat seals and cuts both the edge opposite the fold and the trailing edge. The leading edge has already been sealed during the heat sealing of the preceeding package. The product is now in a loose fitting bag of film closed on all four sides. It next travels on a conveyer through a shrink tunnel where the film is exposed to heat resulting in the heated film shrinking tightly around the product to provide an attractive, clear, form-fitting package.

The following Example will help to illustrate the present invention.

Example

A butene-1/propylene copolymer (C-2756) which contaiins 27 mole % (m%) of propylene comonomer was blended at a 15 weight % (w%) level with a Shell® random propylene copolymer. This particular random propylene copolymer had an ethylene comonomer content of 1.0 wt%, but the ethylene content could vary considerably. Films of the resulting blend (I) were compared with films of (II) random propylene copolymer and (III) a blend of 15 weight % of a butene-1/ethylene copolymer (PB 8240) where the ethylene comonomer content was 0.75 wt% with 85 weight % of the random propylene copolymer (1). Blend (III) is described in US-A-3,634,553 and is typical of compositions used heretofore. Blends were prepared utilizing a drum tumbler and subsequently fed into the hopper of the standard rotating screw extrusion apparatus which served to further mix and melt the blend, and then melt extruded and pelletized thereafter. The temperature of the melt within the extruder was maintained at about 241°C (465°F).

The blend was subsequently extruded in the shape of a tube from a tubular die affixed to the outlet of an extruder, the die being maintained at a temperature of 188°C (370°F). The tube was quenched to a temperature of about 16°C (60°F) which was substantially below the crystalline melting points of the propylene polymer and the butene-1/propylene copolymer immediately upon emergence from the die. The extruded tube had an external diameter of about 5 cm (2 inches) and a wall thickness of 510 $\mu$m (20 mils). Upon cooling, the tube was taken up by a set of draw rollers at about 3.66m/min (12 ft/min) and passed through a preheat oven where it was reheated. The temperature of the preheat oven was maintained at about 540°C (1000°F). The heated tube as immediately reinflated with air pressure which expanded the heated tube by a ratio of 5:1 in a transverse direction and a substantially similar ratio in the longitudinal direction. The expanded tube was subsequently collapsed by a pair of nip rollers operating at speeds higher than the rotational speeds of the draw rollers. The tube was passed to a set of windup rollers finally. The Table illustrates the properties of shrink films 19 $\mu$m (0.75 mil) thick which resulted from this experiment.

## TABLE

| | | (I) | (II) | (III) |
|---|---|---|---|---|
| Shrink @ 104°C(220°F),% | | | | |
| | MD | 7 | 4 | 5 |
| | TD | 10 | 8 | 10 |
| Shrink @ 121°C(250°F),% | | | | |
| | MD | 12.5 | 7 | 6.5 |
| | TD | 20 | 14 | 15.5 |
| Orientation Release Stress,MPa(psi) | MD | 1.72 (250) | 2.48 (360) | 2.44 (354) |
| | TD | 2.52 (365) | 3.95 (573) | 3.08 (446) |
| Contractive Stress MPa(psi) | MD | 1.33 (193) | 1.63 (236) | 1.48 (215) |
| | TD | 0.95 (138) | 1.47 (213) | 0.74 (108) |
| Haze, % | | 2.9–3.9 | 1.9–3.6 | 5 |
| Tagent Modulus,$10^9$Pa ($10^3$ psi) | MD | 1.536 (222.76) | 2.094 (303.7) | 1.709 (247.86) |
| | TD | 1.635 (237.14) | 2.314 (335.68) | 1.761 (255.34) |
| Break Strength, $10^9$Pa (psi) | MD | 0.1118 (16,220) | 0.1337 (19,384) | 0.1274 (18,478) |
| | TD | 0.1144 (16,593) | 0.1205 (17,483) | 0.1054 (15,284) |
| Elongation,% | MD | 78 | 61 | 53 |
| | TD | 88 | 40 | 52 |
| Tear Strength, g/25.4 um(g/mil) | MD | 11.6 | 14 | 12.5 |
| | TD | 13.6 | 13.7 | 11.9 |

As can be seen from the Table, the shrink forces both expressed by orientation release stress and contractive stress of a film (I) in accordance with the invention were much lower than those of the film (II) containing only the random propylene/ethylene copolymer and also lower than those of film (III) prepared from a blend of the random propylene/ethylene copolymer and the butene-1/ethylene copolymer. The lower shrink forces are desirable and, thus, make the film of the invention useful in many shrink packaging applications where low shrink force is required.

As may be seen from the Table, film (I) had somewhat higher percent shrinkage at 104°C (220°F) than film (II) and shrinkage percentage at least comparable to that of film (III). At a temperature of 121°C (250°F), the shrinkage percentage for film (I) was higher than that of either film (II) or film (III).

The modulus and break strength values of film (I) were quite acceptable. The haze or clarity value of film (I) was better than film (III) and as good as film (II). The other properties such as tear strength and elongation are very acceptable, as well.

## Claims

1. A blend suitable for use in producing a heat shrinkable, thermoplastic film or sheet, which blend comprises a mixture containing:
   (i) from 10 to 60% by weight of a butene-1/propylene copolymer, wherein the propylene comonomer content is from 10 to 30 mole percent; and
   (ii) from 40 to 90% by weight of a propylene polymer.

2. A blend according to Claim 1 which comprises from 20 to 50% by weight of (i) and from 50 to 80% by weight of (ii).

3. A blend according to Claim 1 which comprises about 35% by weight of (i), wherein the propylene comonomer content is about 20 mole percent, and about 65% by weight of (ii).

4. A blend according to Claim 1 wherein the propylene polymer (ii) is a propylene homopolymer or a copolymer of propylene and ethylene.

5. A single layer packaging film or sheet formed from a blend as claimed in any one of the preceding claims.

6. A film or sheet according to claim 5 which is an oriented film or sheet.

**Revendications**

1. Mélange convenant à la production d'un film ou d'une feuille thermoplastique, rétractible à chaud, ledit mélange comprenant un mélange contenant:
   (i) de 10 à 60 % en poids d'un copolymère butène-1/propylène, dont la teneur en comonomère propylène est de 10 à 30 % en moles, et
   (ii) de 40 à 90 % en poids d'un polymère de propylène.

2. Mélange selon la revendication 1, qui comprend de 20 à 50 % en poids de (i) et de 50 à 80 % en poids de (ii).

3. Mélange selon la revendication 1, qui comprend environ 35 % en poids de copolymère (i), dont la teneur en comonomère propylène est d'environ 20 % en moles, et environ 65 % en poids de polymère (ii).

4. Mélange selon la revendication 1, dans lequel le polymère de propylène (ii) est un homopolymère de propylène ou un copolymère de propylène et d'éthylène.

5. Film d'emballage monocouche ou feuille d'emballage formé (e) à partir d'un mélange tel que revendiqué dans l'une quelconque des revendications précédentes.

6. Film ou feuille selon la revendication 5 qui est un film ou une feuille orienté (e).

**Patentansprüche**

1. Gemisch, geeignet zur Verwendung bei der Herstellung einer aufschrumpfbaren, thermoplastischen Feinfolie oder Folie, das ein Gemisch umfaßt, welches enthält:
   (i) 10 bis 60 Gew.-% eines Buten-1/Propylen-Copolymeren, worin der Propylen-Comonomergehalt 10 bis 30 mol-% ausmacht, und
   (ii) 40 bis 90 Gew.-% eines Propylenpolymeren.

2. Gemisch nach Anspruch 1, welches 20 bis 50 Gew.-% (i) und 50 bis 80 Gew.-% (ii) umfaßt.

3. Gemisch nach Anspruch 1, das etwa 35 Gew.-% (i), worin der Propylen-Comonomergehalt etwa 20 mol-% ausmacht, und etwa 65 Gew.-% (ii) umfaßt.

4. Gemisch nach Anspruch 1, worin das Propylenpolymer (ii) ein Propylenhomopolymer oder ein Copolymer aus Propylen und Ethylen ist.

5. Einschichtige Verpackungs-Feinfolie oder Folie, hergestellt aus einem Gemisch nach einem der vorangehenden Ansprüche.

6. Feinfolie oder Folie nach Anspruch 5, die eine orientierte Feinfolie oder Folie ist.